Europäisches Patentamt

European Patent Office

Office européen des brevets

(11) Numéro de publication: **0 379 458**
**A1**

## (12) DEMANDE DE BREVET EUROPEEN

(21) Numéro de dépôt: **90460003.8**

(22) Date de dépôt: **12.01.90**

(51) Int. Cl.⁵: **G06F 15/72**

(30) Priorité: **17.01.89 FR 8900729**

(43) Date de publication de la demande:
**25.07.90 Bulletin 90/30**

(84) Etats contractants désignés:
**AT BE CH DE ES GB GR IT LI LU NL SE**

(71) Demandeur: **Mevel, Denis**
**Ancien Presbytère**
**F-29170 Pleuven(FR)**

(72) Inventeur: **Mevel, Denis**
**Ancien Presbytère**
**F-29170 Pleuven(FR)**

(74) Mandataire: **Le Guen, Louis François**
**CABINET Louis LE GUEN 38, rue Levavasseur**
**B.P. 91**
**F-35802 Dinard Cédex(FR)**

(54) **Appareil de préparation, avec présentation visuelle synthétique d'un aménagement.**

(57) Il comprend une unité logique de commande, une mémoire de masse contenant des données graphiques de chaque meuble du catalogue, des moyens de sélection de données graphiques dans la mémoire de masse, des moyens de traitement des données graphiques lues par les moyens de sélection, des moyens d'acquisition de données dimensionnelles relatives à la projection horizontale du volume à aménager, des moyens de présentation recevant lesdites données dimensionnelles délivrées par les moyens d'acquisition et les données graphiques délivrées par les moyens de traitement pour présenter les projections horizontales des meubles correspondants aux données graphiques reçues a l'intérieur de la projection horizontale dudit volume.

Les moyens de traitement contiennent des moyens de concaténétion des données graphiques lues par les moyens de sélection en partant d'une origine constituée par un coin de la projection horizontale dudit volume et dans le sens d'un côté de ladite projection horizontale du volume partant dudit coin. La concaténation est effectuée dans l'ordre de la sélection effectuée par les moyens de sélection. La suite des données graphiques concaténées étant transmises au moyen de présentation.

FIG.1

## Appareil de préparation, avec présentation visuelle synthétique d'un aménagement

La présente invention concerne un appareil de préparation, avec présentation visuelle synthétique, de l'aménagement d'une pièce d'habitation. Plus particulièrement, l'invention concerne un appareil de préparation de l'aménagement d'une pièce technique telle qu'une cuisine ou une salle de bains.

Dans la suite, on considérera plus particulièrement l'aménagement d'une cuisine moderne. Un tel aménagement consiste d'abord à choisir dans un catalogue des meubles fonctionnels dont le nombre de types est limité et dont les dimensions, notamment en largeur, sont variables. L'aménagement consiste ensuite à positionner les meubles choisis le long des murs de la pièce en tenant compte de leurs relations fonctionnelles et en évitant qu'ils ne viennent obstruer un accès, tel qu'une porte ou une fenêtre, ou qu'ils ne rencontrent un obstacle, tel qu'un radiateur déjà existant.

Dans l'article de D.E. PENNA "Consumer applications for 3D image synthesis", paru dans la revue IEEE'88 International Conference on Consumer Electronics - DIGEST OF TECHNICAL PAPERS, New York, 8-10 juin 1988, pages 182-183, un principe d'un tel aménagement est décrit. Il consiste à choisir les meubles d'une cuisine sur un écran à l'aide d'une souris et de les placer manuellement sur une représentation en deux dimensions de la cuisine à l'aide de la même souris.

L'appareil de l'invention est destiné à être mis à la disposition d'un vendeur pour lui permettre de construire visuellement, directement avec un client, d'une manière totalement interactive en temps réel et automatique, la cuisine du client à partir d'un catalogue de meubles.

Suivant une caractéristique de l'invention, il est prévu un appareil de préparation d'aménagement d'un volume à partir d'un catalogue de meubles comportant une unité logique de commande, une mémoire de masse contenant des données graphiques de chaque meuble du catalogue, des moyens de sélection de données graphiques dans la mémoire de masse, des moyens de traitement des données graphiques lues par les moyens de sélection, des moyens d'acquisition de données dimensionnelles relatives à la projection horizontale du volume à aménager, des moyens de présentation recevant lesdites données dimensionnelles délivrées par les moyens d'acquisition et les données graphiques délivrées par les moyens de traitement pour présenter les projections horizontales des meubles correspondants aux données graphiques reçues à l'intérieur de la projection horizontale dudit volume.

Suivant une autre caractéristique, lesdits moyens de traitement contiennent des moyens de concaténation des données graphiques lues par les moyens de sélection en partant d'une origine constituée par un coin de la projection horizontale dudit volume et dans le sens d'un côté de ladite projection horizontale du volume partant dudit coin, la concaténation étant effectuée dans l'ordre de la sélection effectuée par les moyens de sélection, et la suite des données graphiques concaténées étant transmises aux moyens de présentation.

Suivant une autre caractéristique, les données dimensionnelles de la projection horizontale du volume à aménager com prennent non seulement les coordonnées des coins, mais encore celles des extrémités des projections des ouvertures dudit volume.

Suivant une autre caractéristique, l'appareil comprend encore des moyens de traduction des données graphiques concaténées et des données dimensionnelles en coordonnées de douze vecteurs ou plus, et des moyens d'alarme qui sont déclenchés quand un vecteur correspondant à un meuble interfère avec les vecteurs correspondant à un autre meuble, à une ouverture ou à un côté dudit volume.

Suivant une autre caractéristique, les données graphiques de chaque meuble comprennent aussi des données relatives à leurs faces avant, éventuellement avec leurs couleurs, et les moyens de présentation comportent, une fois les sélections et les concaténations terminées, de présenter des perspectives d'ensembles de meubles dans le volume à aménager.

Suivant une autre caractéristique, la mémoire de masse contient, en plus des données graphiques, pour chaque meuble des données de prix.

Les caractéristiques de l'invention mentionnées ci-dessus, ainsi que d'autres, apparaîtront plus clairement à la lecture de la description d'un exemple de réalisation, ladite description étant faite en relation avec les dessins joints, parmi lesquels:

la Fig. 1 est un bloc-diagramme fonctionnel d'un appareil suivant l'invention,

la Fig. 2 est une vue de la tablette de saisie utilisée dans l'appareil de l'invention,

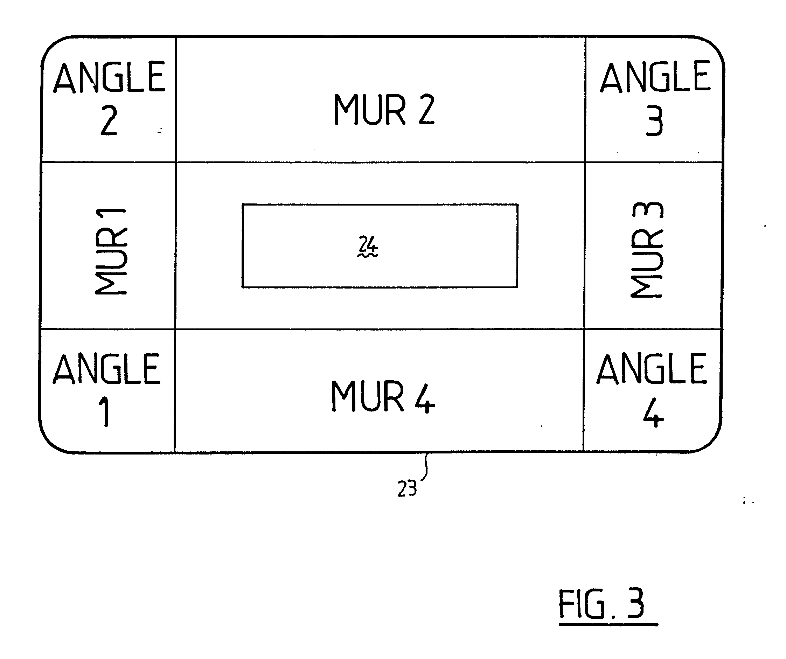

la Fig. 3 est une vue à plus grande échelle d'une partie de la tablette de la Fig. 2,

la Fig. 4 est une vue schématique illustrant le cas où un meuble sélecté interfère avec une ouverture du volume à aménager,

la Fig. 5 est une vue à plus grande échelle de la zone d'interférence de la Fig. 4,

la Fig. 6 est une vue schématique illustrant le cas où il y a interférence entre deux meubles sélectés, et

la Fig. 7 est une vue à plus grande échelle de la zone d'interférence de la Fig. 6.

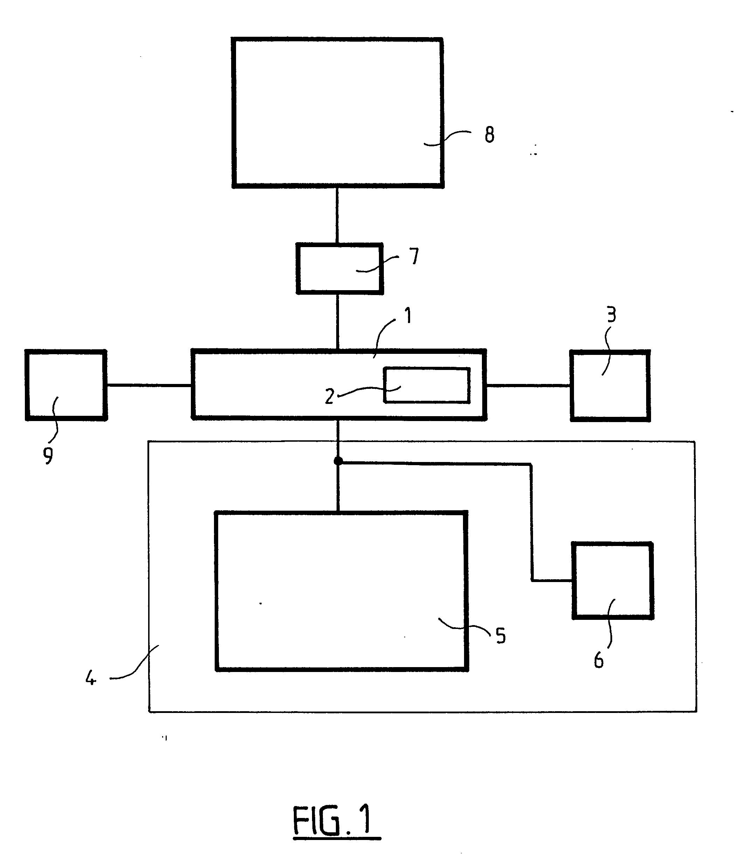

L'appareil de la Fig. 1 comprend une unité logique de commande 1, à l'intérieur de laquelle on distinguera en particulier l'unité de traitement 2, une mémoire de masse 3, une tablette de saisie 4 comprenant des moyens de sélection 5 et des moyens d'acquisition 6, une interface 7, un dispositif d'affichage 8 et une imprimante 9. L'unité logique de commande 1 peut, par exemple, comprendre deux microprosseurs associés tels que ceux qui sont commercialisés sous la référence 80386 et 80387/20, et une mémoire à accès aléatoire. La mémoire de masse 3 peut être constituée d'un disque dur, le dispositif d'affichage 8 peut être un moniteur multisync II couleur. L'interface 7 peut être une carte graphique. La tablette de saisie 4 peut être une tablette à numériser. L'unité 1 est reliée directement aux éléments 3, 4 et 9, et, par l'intermédiaire de l'interface 7, au dispositif d'affichage 8.

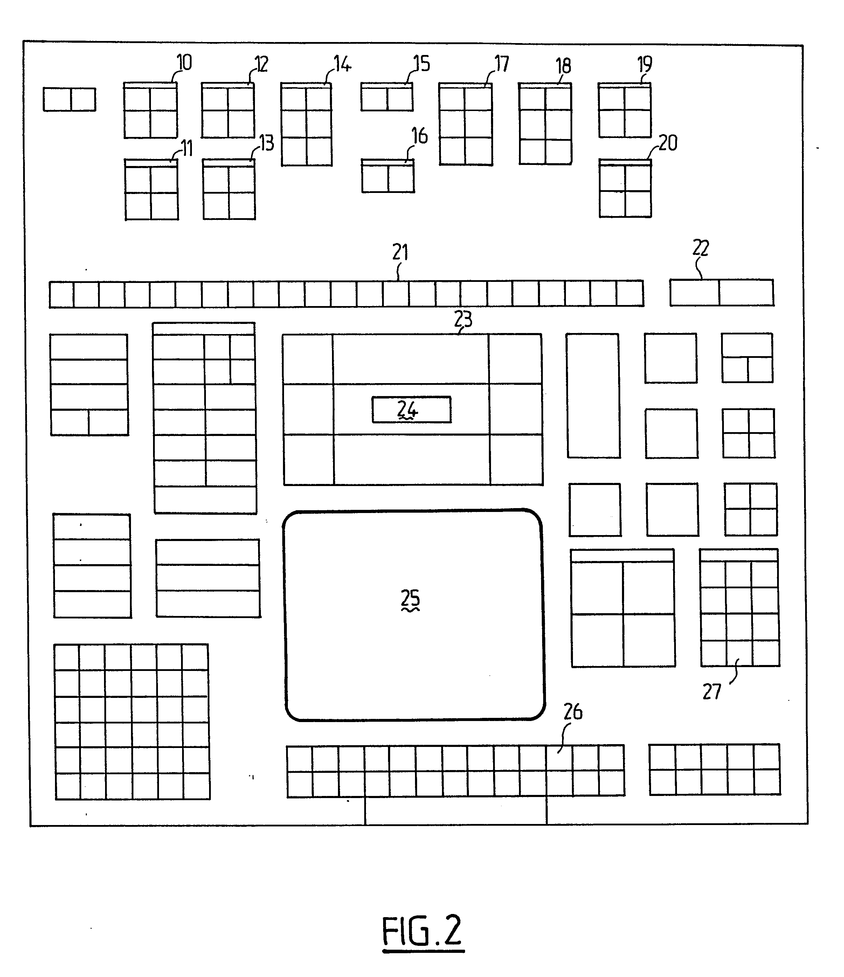

La Fig. 2 montre comment la tablette 4 se présente à un utilisateur. Dans la partie haute de la tablette, sont regroupées les touches permettant de choisir un type de meubles. Par exemple, le groupe 10 comprend quatre touches permettant de choisir, parmi quatre, un type de meuble bas de forme rectangulaire, alors que le groupe 11 comporte quatre touches permettant de choisir un type de meuble d'angle. On a ainsi un groupe 12 pour les meubles hauts, 13 pour les meubles hauts d'angle, 14 pour les colonnes, 15 et 16 pour les filleurs bas et hauts, et 17 pour les hottes. Il y a, de plus, un groupe de touches 18 permettant de choisir des terminaux, 19 des habillages et 20 des décorations. Afin de simplifier le dessin, on a supposé ci-dessus que les groupes 10, 11, etc., ne comprenaient qu'un nombre limité de touches, tel que quatre touches. En pratique, ces nombres sont généralement plus importants.

Au-dessous de ces groupes, une rangée de touches 21 permet de définir la largeur du meuble déjà choisi par les touches 10 à 17. A droite de la rangée 21, en regardant le dessin, des touches 22 servent à choisir l'emplacement à "gauche" ou à "droite" des ferrures des meubles. En pratique, la désignation d'une touche dans l'ensemble des groupes 10 à 17, la désignation d'une touche dans la rangée 21 et, s'il y a lieu, la désignation d'une touche 22 forment une adresse qui est appliquée par la tablette 4 à la mémoire de masse 3 par l'intermédiaire de l'unité 1, puis la mémoire de masse 3 délivre à l'unité 1 ce que l'on a appelé dans le préambule les données graphiques d'un meuble. L'ordre dans lequel ces données graphiques parviennent dans l'unité 1 détermine le positionnement des meubles par l'intermédiaire de l'unité de traitement 2, qui transmet le résultat obtenu au dispositif d'affichage 8 par l'intermédiaire de l'interface 7.

Sous la rangée 21, au milieu est prévu un ensemble de touches 23, dont les positions permettent de représenter symboliquement le volume à aménager par quatre murs. En pratique, l'ensemble 23 comprend une touche centrale rectangulaire 24 dont les côtés sont prolongés de manière à délimiter quatre touches MUR1 à MUR4 et quatre touches ANGLE1 à ANGLE4, dont on définira le rôle dans la suite. La touche centrale 24 permet, dans l'exemple décrit, de déclencher le traitement graphique de l'appareil.

Au-dessous de l'ensemble 23, est prévue une surface 25 qui permet de pointer des zones de l'écran du dispositif d'affichage 8. Sous la surface 25 est prévu un clavier 26 qui associé à un ensemble de touches numériques 27 permet d'écrire dans l'appareil des informations alphanumériques, tel que, par exemple, l'identité du client, etc. Les autres ensembles de touches qui sont encore symboliquement représentées sont relatifs à diverses commandes qui sont classiques sur une tablette de saisie et permettent des échanges interactifs avec l'appareil. Ce sont, par exemple, des touches "OUI", "NON", "OK", des touches d'effacement, etc.

Avant de décrire l'ensemble du fonctionnement de l'appareil de l'invention, on va préciser trois fonctions qui y jouent chacune un rôle important: la concaténation, le positionnement des meubles et l'interférence des vecteurs.

La concaténation est une association logique de plusieurs éléments pour en former une commande ou un code précis. Dans l'appareil, l'utilisation de la concaténation permet, par des choix successifs d'éléments, de constituer un code concaténé propre à un ensemble de segments et d'entités vectorielles constituant un meuble.

Un meuble étant sélectionné dans la mémoire de masse, l'appareil, par intégration d'un certain nombre de macro-commandes, positionne cet élément choisi à un point précis sur l'écran sans qu'il soit nécessaire de donner de quelque manière que ce soit les coordonnées relatives ou absolues du point de positionnement par rapport à un trièdre de référence unique OX,Y,Z.

La concaténation s'exécute sur la tablette à numériser qui regroupe tous les choix de meubles possibles et les diverses commandes permettant la réalisation d'une cuisine.

Le choix d'un meuble est effectué:

1) par son choix dans un groupe de types de meubles; par exemple, si l'on désire un meuble bas, on agit sur la touche correspondante dans le groupe 10;

2) Puis, par le choix de la largeur du meuble; en utilisant la touche correspondant à la largeur voulue dans le groupe 21;

3) Enfin, par le choix de l'emplacement des ferrures, c'est-à-dire du sens d'ouverture des portes s'il y a lieu.

Le meuble étant choisi et défini, il faudra à la suite assurer son positionnement très précis dans la configuration du volume de la cuisine.

La base du système de positionnement est un graphe représentant, par rapport à un trièdre de référence OX,Y,Z, quatre murs qui se dessinent sur l'écran du dispositif d'affichage en fonction de trois informations données par l'acheteur potentiel, la projection horizontale du volume de la cuisine étant supposée rectangulaire. Ce sont:

- la longueur du rectangle,
- la largeur du rectangle,
- la hauteur du volume, qui peut être donnée par défaut.

Ces données sont entrées dans l'appareil au moyen de la ta blette et, en particulier, des touches numériques. On obtient alors un parallélépipède dont on connaît toutes les coordonnées relatives par rapport au trièdre de référence.

L'ensemble des angles du parallélépipède sont donc connus et représentent dans le graphe quatre angles, soit les angles 1 à 4. Sur ce graphe, on isole, d'autre part,

- le segment reliant l'angle 1 et l'angle 2, qui correspond au mur 1;
- le segment reliant l'angle 2 et l'angle 3 correspondant au mur 2;
- le segment reliant l'angles 3 et l'angle 4 correspondant au mur 3;
- le segment reliant l'angle 4 et l'angle 1 correspondant au mur 4.

On peut donc, en fonctionnement, via la tablette, isoler un mur et un angle, dans l'ensemble 23.

Un mur, par exemple le mur 1, étant celui contre lequel on doit positionner des meubles choisis par concaténation, et un angle, par exemple l'angle 1, étant le point de départ, l'association des deux donne le point de départ et le sens. Pour exécuter cette opération, il faut agir sur la touche MUR 1, puis sur la touche ANGLE 1.

A tout moment, il est possible de revenir sur ces choix pour partir d'un autre point et dans un autre sens, le principe fondamental étant, par rapport à un parallélépipède de départ, dont on connaît toutes les coordonnées, de placer après choix concaténé, des meubles aux endroits définis.

Le meuble y a en propre un point d'insertion précis et étant lui-même associé dans sa transaction à une macro-commande qui définit son point d'insertion.

On place donc successivement un certain nombre de meubles dont on connaît toujours les coordonnées relatives et chaque action fait que l'on positionne successivement ces derniers les uns par rapport aux autres et par rapport au mur et à l'angle de départ.

Le principe de positionnement est de ce fait totalement auto matisé et, après choix par concaténation sur la tablette, les éléments choisis apparaîtront sur l'écran du dispositif d'affichage à l'endroit voulu sans qu'il y ait eu à intervenir de quelque manière que ce soit pour définir les coordonnées de positionnement. Pour le réaliser, on agit sur la touche 24.

Dans la pratique, le volume à aménager comporte évidemment des ouvertures, porte et fenêtres, dont les positions dans le volume, c'est-à-dire les coordonnées de vecteurs, sont des données que l'utilisateur entre dans l'appareil en même temps que les données dimensionnelles du volume.

Par ailleurs, il est possible qu'en partant d'un coin le long d'un mur, l'utilisateur ne désire pas immédiatement un meuble. Il y a donc un décalage d'origine que l'utilisateur définit.

Enfin, pour diverses raisons, l'utilisateur peut être amener à positionner sur un mur quelques meubles en partant d'un coin associé au mur, puis à en positionner d'autres en partant de l'autre coin associé au même mur.

Le positionnement ainsi automatisé pourrait avoir pour conséquence, du fait de sa rapidité, le positionnement d'un meuble dans une zone interdite telle que:

- devant une porte;
- devant une fenêtre; etc.

ou éventuellement, par juxtaposition successive ayant eu deux actions à partir d'angles différents, il pourrait se faire que, graphiquement, deux meubles se superposent ou s'encastrent dans un mur. L'ensemble des points cités n'étant pas acceptable, on a donc développé un algorithme permettant de détecter quand il y a interférence des vecteurs ou plus simplement superposition de segments.

Le principe est de définir par rapport au volume total du meuble, un parallélépipède (dont on connaît toutes les coordonnées) appelé "zone d'influence".

Ce parallélépipède se compose de douze segments et, si un de ces segments vient à se superposer avec un autre segment appartenant à une autre entité, il y aurait, du fait, interfé rence de vecteurs donc message par la machine de positionnement impossible ou non souhaitable.

Cet algorithme étant intégré à chaque macro-commande de transaction de positionnement d'objet, on a donc une gestion en temps réels de ces interférences de vecteurs dans leur zone d'influence respective. Cette gestion peut aussi se faire en différé sur instruction de l'utilisateur quand ce dernier estime qu'il y a un problème possible. On prévoit donc que l'appareil soit en présente ou non d'une difficulté.

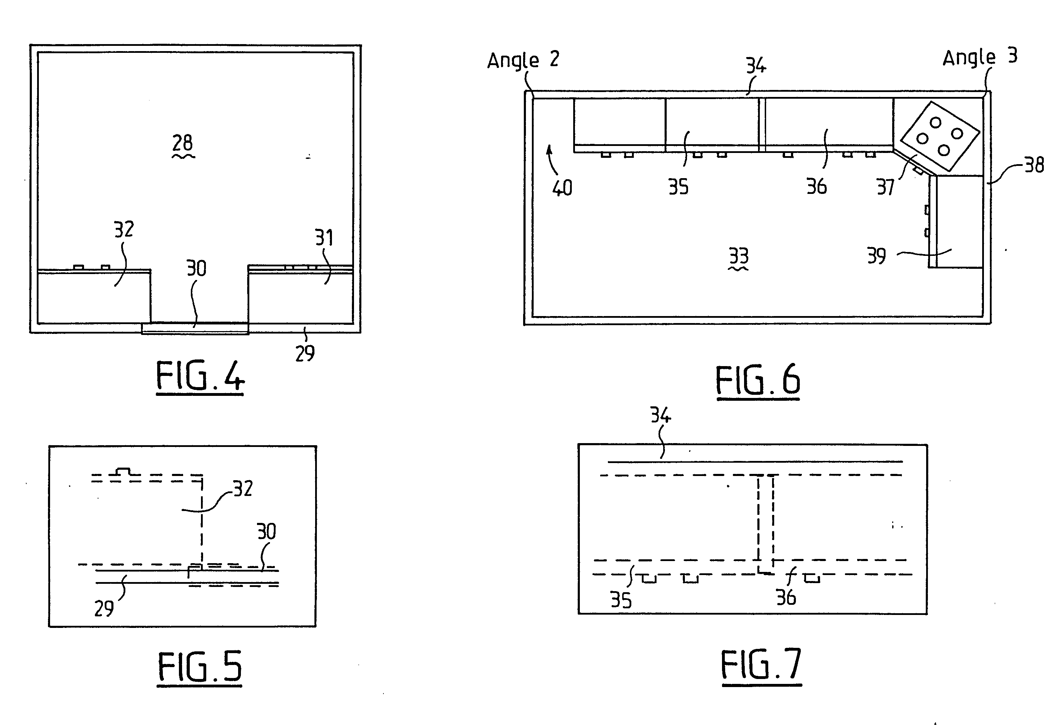

A la Fig. 4, on a représenté la projection horizontale d'un volume 28, dans lequel on a positionné, le long d'un mur 29 comportant une fenêtre 30, deux meubles 31 et 32 en partant de deux coins différents. La largeur du meuble 32 est trop grande si bien qu'une partie en obstrue la fenêtre 30. Sur la tablette 4, on a prévu une touche "loupe" qui permet de montrer à plus grande échelle une zone quelconque de l'écran du dispositif d'affichage 8. Dans le cas où il y a interférence entre un meuble et une ouverture, tel qu'à la Fig. 4, la loupe permet d'obtenir une image de la zone considérée, les éléments en interférence apparaissant alors en traits tirets, comme le montre la Fig. 5.

A la Fig. 6, on a représenté la projection horizontale d'un volume 33 dans lequel le long d'un mur 34 on a choisi des meubles en partant de deux coins différents, l'angle 2 et l'angle 3. Il en résulte une interférence entre les meuble 35 et 36, ce que montre la vue de la Fig. 6 obtenue par la loupe.

Bien entendu dans les cas d'interférence, on efface le choix du meuble 32, Fig. 4, ou 35 ou 36, Fig. 6, que l'on remplace, par exemple, par des meubles moins larges.

La Fig. 6 montre également le positionnement d'un meuble de coin 37. Tout d'abord, pour définir un tel meuble, il apparaît qu'il faut plus de douze vecteurs. Ensuite, le meuble 37 étant positionné le long du mur 34 en partant de l'angle 3, il faut considérer que sa dimension le long du mur adjacent 38 est directement prise en compte quand on place un meuble suivant 39. Enfin, la Fig. 6 montre aussi un décalage 40, le long du mur 34 en partant de l'angle 2. En pratique, on a donc dans ce cas un changement d'origine, comme on l'a mentionné plus haut.

**Revendications**

1) Appareil de préparation, avec présentation visuelle synthétique, de l'aménagement d'un volume à partir d'un catalogue de meubles caractérisé en ce qu'il comprend une unité logique de commande (1), une mémoire de masse (3) contenant des données graphiques de chaque meuble du catalogue, des moyens (5) de sélection de données graphiques dans la mémoire de masse (3), des moyens (2) de traitement des données graphiques lues par les moyens de sélection (5), des moyens (6) d'acquisition de données dimensionnelles relatives à la projection horizontale du volume à aménager, des moyens de présentation (8) recevant lesdites données dimensionnelles délivrées par les moyens d'acquisition et les données graphiques délivrées par les moyens de traitement pour présenter les projections horizontales des meubles correspondants aux données graphiques reçues à l'intérieur de la projection horizontale dudit volume.

2) Appareil suivant la revendication 1, caractérisé en ce que lesdits moyens de traitement (2) contiennent des moyens de concaténation des données graphiques lues par les moyens de sélection (5) en partant d'une origine constituée par un coin de la projection horizontale dudit volume et dans le sens d'un côté de ladite projection horizontale du volume partant dudit coin, la concaténation étant effectuée dans l'ordre de la sélection effectuée par les moyens de sélection, et la suite des données graphiques concaténées étant transmises aux moyens de présentation.

3) Appareil suivant la revendication 2, caractérisé en ce que l'origine constituée par un coin peut être arbitrairement décalée.

4) Appareil suivant la revendication 2 ou 3, caractérisé en ce que les données dimensionnelles de la projection horizontale du volume à aménager comprennent non seulement les coordonnées des coins, mais encore celles des extrémités des projections des ouvertures dudit volume.

5) Appareil suivant l'une des revendications 1 à 4, caractérisé en ce que l'appareil comprend encore des moyens de traduction des données graphiques concaténées et des données dimensionnelles en coordonnées de 12 vecteurs ou plus, et des moyens d'alarme qui sont déclenchés quand un vecteur correspondant à un meuble interfère avec les vecteurs correspondant à un autre meuble, à une ouverture ou à un côté dudit volume.

6) Appareil suivant l'une des revendications 1 à 5, caractérisé en ce que les données graphiques de chaque meuble comprennent aussi des données relatives à leurs faces avant, éventuellement avec leurs couleurs, et les moyens de présentation comportent, une fois les sélections et les concaténations terminées, de présenter des perspectives d'ensembles de meubles dans le volume à aménager.

7) Appareil suivant l'une des revendications 1 à 6, caractérisé en ce que la mémoire de masse contient, en plus des données graphiques, pour chaque meuble des données de prix.

8) Appareil suivant l'une des revendications 1 à 7, caractérisé en ce que, dans la mémoire de masse (3), l'adresse des données graphiques relative à chaque meuble est obtenue par concaténation d'une information de choix de type de meubles, une information de largeur et une éventuelle information de sens d'ouverture de porte.

<u>FIG.1</u>

FIG.2

| ANGLE 2 | MUR 2 | ANGLE 3 |
|---------|-------|---------|
| MUR 1 | 24 | MUR 3 |
| ANGLE 1 | MUR 4 | ANGLE 4 |

23

<u>FIG. 3</u>

EP 0 379 458 A1

FIG.4

FIG.5

FIG.6

FIG.7

Angle 2

Angle 3

28

32

30

31

29

32

30

29

34

35

36

37

38

39

40

33

34

35

36

EP 0 379 458 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | IEEE'88 INTERNATIONAL CONFERENCE ON CONSUNER ELECTRONICS - DIGEST OF TECHICAL PAPERS, New York, 8-10 juin 1988, pages 182-183, IEEE, New York, US; D.E. PENNA: "Consumer applications for 3D image synthesis" * Page 182, colonne 2, lignes 37-42; figures 2-3 * | 1 | G 06 F 15/72 |
| A | IDEM | 6 | |
| A | US-A-4 700 317 (WATANABE et al.) * Colonne 3, lignes 23-37; figures 1-2; tableau 1 * | 1,4,6 | |
| A | FR-A-2 566 148 (GARCIN et al.) * Page 2, ligne 21 - page 3, ligne 4; page 6, lignes 13-25; figure 1 * | 1,2 | |
| A | MECHANICAL ENGINEERING, vol. 107, no. 4, avril 1985, pages 40-44, New York, US; A.M. BURGER et al.: "Three-dimensional design modeling of plants" * Page 42, colonne 1, ligne 26 - colonne 2, ligne 4 * | 5 | |

DOMAINES TECHNIQUES
RECHERCHES (Int. Cl.5)

G 06 F 15/72
G 06 F 15/60
F 06 F 3/033

Le présent rapport a été établi pour toutes les revendications

| Lieu de la recherche | Date d'achèvement de la recherche | Examinateur |
|---|---|---|
| LA HAYE | 24-04-1990 | GUINGALE A. |